# FASCICULE DE BREVET EUROPEEN

(11) **EP 4 186 015 B1**
(45) Date de publication et mention de la délivrance du brevet: **03.12.2025**
(21) Numéro de dépôt: 21743111.3
(22) Date de dépôt: 07.07.2021
(51) Int. Cl.: G06Q 10/0631, G06Q 10/0875, G06Q 50/04, G06Q 10/08

(54) **PROCÉDÉ POUR LE PARTAGE DE DONNÉES DE FABRICATION D'UN PRODUIT**
VERFAHREN ZUR GEMEINSAMEN NUTZUNG VON HERSTELLUNGSDATEN EINES PRODUKTS
METHOD FOR SHARING DATA RELATING TO THE MANUFACTURING OF A PRODUCT

(30) Priorité: 23.07.2020 FR 2007759
(43) Date de publication de la demande: 31.05.2023
(73) Titulaire: THALES, 92190 Meudon (FR)
(72) Inventeur: VALENTIN, François, 38430 Moirans (FR); GAILLARD, Frédéric, 33700 Merignac (FR)
(74) Mandataire: Atout PI Laplace
(86) Numéro de dépôt international: PCT/EP2021/068884
(87) Numéro de publication internationale: WO 2022/017804

(56) Documents cités:
- EP-A1- 3 651 092
- US-A1- 2004 084 520
- FERNANDEZ-CARAMES TIAGO M ET AL: "A Review on Human-Centered IoT-Connected Smart Labels for the Industry 4.0", IEEE ACCESS, vol. 6, 5 June 2018 (2018-06-05), pages 25939 - 25957, XP011684872, DOI: 10.1109/ACCESS.2018.2833501

## Description

### Domaine technique

La présente invention concerne un procédé pour le partage de données de fabrication d'un produit, un système pour le partage de données de fabrication d'un produit, un produit programme d'ordinateur comportant des instructions de programme exploitables par ledit système pour le partage de données de fabrication d'un produit.

### Technique antérieure

Il est connu d'utiliser des étiquettes communicantes radio fréquence, dite étiquettes RFID (pour « Radio Frequency Identification » en anglais) dans des processus de fabrication qui nécessitent une certaine dématérialisation, une sécurisation et une garantie de configuration des produits fabriqués. Ces contraintes sont particulièrement présentes dans les domaines de haute technologie comme la production de produits pour l'aéronautique, pour le spatial ou pour le domaine médical. De manière classique, un procédé de fabrication consiste en l'assemblage de différents sous-produits lors de différentes opérations de fabrication dans un certain ordre et selon des caractéristiques et des étapes de fabrication définies lors du développement et de l'industrialisation de ce produit. Le passage en série se traduit par la répétition fidèle de ces différentes opérations de fabrication au moyen d'un logiciel d'aide à l'exécution ou tout autre moyen permettant à postériori de valider et de comparer la réalisation physique du produit aux éléments d'un dossier de définition de ce produit. Dans le cadre de produits destinés à des marchés dans lequel l'environnement normatif est de haut niveau, ceux-ci peuvent s'accompagner d'un paquet documentaire justifiant la réalisation, les tests, les origines matières et tout autre document réclamé par le client. De manière classique, un processus de fabrication peut être généré à l'aide d'un logiciel de suivi d'exécution de production, tel qu'un logiciel PLM (pour «Product Lifecycle Management » en anglais), un logiciel ERP ( pour « Entreprise Ressource Program » en anglais) ou un logiciel MES (pour « Manufacturing Execution System » en anglais). De tels logiciels sont adaptés pour associer à chaque étape de production la mise à dispositif de tout élément de plan ou instructions nécessaires. Or ces logiciels nécessitent des bases de données de taille importante. De plus, tout changement d'état physique du produit s'accompagne d'un changement dans le système d'information, ce qui induit des flux de données conséquents entre les différentes machines de la ligne de production. L'accès à des objets communicants bas coûts tels que des étiquettes RFID contribue de plus en plus dans l'industrie à favoriser la localisation, l'identification et l'emport de données associées à des sous-produits. Ceci favorise les processus industriels mais sans que toutes les potentialités de ces étiquettes RFID n'aient été exploitées.

Le document US 2004/0084520 A1 divulgue un procédé de gestion de données dans lequel de nouvelles données sont incorporées dans une seule étiquette RFID.
Il existe un besoin d'améliorer le procédé de partage de données de fabrication d'un produit utilisant des étiquettes RFID tout en s'affranchissant, au moins partiellement, de la nécessité d'utiliser des logiciels de suivi d'exécution de production et en améliorant la traçabilité, la conformité de réalisation et la sécurisation des données partagées.

### Exposé de l'invention

La présente invention vise à remédier au moins en partie à ce besoin.

Plus particulièrement, la présente invention vise à améliorer le partage de données de fabrication d'un produit.

Un premier objet de l'invention concerne un procédé pour le partage de données de fabrication d'un produit, ledit produit étant fabriqué à partir de différents sous-produits lors de différentes opérations de fabrication, chaque sous-produit et/ou chaque opération de fabrication étant associé à une étiquette RFID, chaque étiquette RFID comprenant des données d'état de fabrication du produit. Lors de la fabrication du produit, le procédé comprend :
- une étape de réception de données d'état de la fabrication du produit des aux moins deux étiquettes RFID ;
- une étape de génération de nouvelles données d'état de la fabrication du produit à partir desdites données d'état reçues, lesdites données d'état reçues étant réorganisées au cours de ladite étape de génération ;
- une étape de transmission des nouvelles données d'état de fabrication du produit vers les au moins deux étiquettes RFID.

La solution proposée s'appuie sur l'existence en parallèle de composants physiques pour la réalisation d'une opération de production et des étiquettes radio fréquences attachées aux sous-produits permettant de répondre à des requêtes de localisation mais aussi à des échanges de données. Un assemblage se matérialise par la réunion en une unité de lieu et de temps de un ou plusieurs sous-produits, mais également de l'image informatique de cette transaction d'assemblage. Ainsi, c'est le produit en cours d'assemblage qui porte le système d'information. Les étiquettes RFID contiennent les données d'état de la fabrication du produit à un instant donné. Ces données d'état de la fabrication du produit sont mises à jour à chaque opération de fabrication. Les opérations d'assemblage physique et informatique sont en parfaite bijection et on ne peut plus valider une opération si les sous-produits n'ont pas réellement franchi cette opération. Les transactions en lien avec les logiciels de suivi sont réduites au strict minimum, ce qui permet une plus grande tolérance aux éventuelles pannes du réseau. En outre, les données d'état de la fabrication du produit sont disponibles en limitant les interactions avec un réseau global, ce qui donne de l'autonomie et de la flexibilité aux ateliers de fabrication. Enfin, le parcours de production est généré de manière itérative par un chargement des opérations de l'étape N+1 à la fin de la validation de l'étape N et non plus de manière globale au début d'un cycle. Ceci permet de bénéficier des données d'état de la fabrication qui sont seulement nécessaires à l'étape en cours.

Dans un mode de réalisation l'étape de génération comprend une étape d'agrégation des données d'état des aux moins deux étiquettes RFID, une étape de fractionnement desdites données d'état, une étape de fusion des données fractionnées pour former des nouvelles données d'état de fabrication du produit.

Ainsi, les données d'état sont réorganisées au cours de l'étape de génération. Celles-ci sont d'abord agrégées. Par « agrégation », on entend l'action de réunir des éléments distincts pour former un tout homogène. L'étape d'agrégation correspond ainsi à une étape de concaténation dans laquelle il est possible d'identifier tous les éléments agrégés. Les données d'état agrégées sont ensuite fractionnées, c'est-à-dire, découpées pour former des données fractionnées. Ces données fractionnées sont fusionnées pour former de nouvelles données d'état de fabrication du produit. Par « fusion », on entend l'action de réunir des éléments distincts pour former un tout homogène mais dans laquelle on ne peut pas percevoir l'origine des données fusionnées. Au cours de ces étapes, il est possible d'effectuer différentes opérations sur les données d'état telles que des opérations de duplications partielles ou totales des données etc. Les nouvelles données d'état générées sont transmises aux au moins deux étiquettes RFID.

Dans un mode de réalisation particulier, les nouvelles données d'état de fabrication du produit sont réparties entre les au moins deux étiquettes RFID.

Ces nouvelles données d'état sont ainsi éclatées entre différentes étiquettes RFID, ce qui permet une sécurisation global de ces données tout en traduisant en parallèle l'état d'avancement dans la fabrication du produit. Les calculs de répartition des données d'état de fabrication du produit sont réalisés au plus près via les étiquettes RFID ou des machines locales, ce qui diminue la charge au niveau des serveurs d'entreprise. Préférentiellement, ce sont les mêmes données d'état qui sont transmises aux deux étiquettes RFID. En variante, les nouvelles données d'état transmises sont différentes entre les étiquettes RFID.

Dans un mode de réalisation particulier, les données d'état de fabrication du produit comprennent des données choisies parmi la liste des données suivantes :
- un ou plusieurs plans ;
- un ou plusieurs certificats de conformité ;
- une ou plusieurs fiches d'instructions ;
- un ou plusieurs résultats de fabrication.

Les processus de fabrication dans l'industrie sont basés sur l'exécution en production d'opérations de fabrication, en conformité avec un dossier de définition qui est une compilation non exhaustive de données de plans, matières, gammes de fabrication et de contrôle, instructions variés, méthodes de test , etc. Les séquences de production font appel en permanence à ce dossier de définition pour faire progresser le produit et bâtir de manière symétrique un dossier de fabrication, la finalisation du produit étant sanctionnée par la bonne fin de ces opérations et une vérification de conformité.

Dans un mode de réalisation particulier, le procédé comprend, préalablement à l'étape de transmission des nouvelles données, une étape d'encryptage desdites nouvelles données d'état.

Ainsi, toute modification dans les données d'état de fabrication est traduite par une transaction sécurisée avec les étiquettes RFID. Cette transaction utilise par exemple un cryptage asymétrique à l'aide d'un couple de clé privée, clé publique. On améliore ainsi globalement la sécurité du procédé pour le partage des données.

Dans un mode de réalisation particulier, le procédé comprend une étape de vérification des données d'état reçues.

Ainsi, à chaque opération de fabrication, il est procédé à une vérification des données d'état. Cette vérification a lieu, par exemple, une fois que les données d'état provenant de différentes étiquettes RFID sont fusionnées. Si par inadvertance, une ou plusieurs étiquettes RFID sont substituées sur le produit en cours de fabrication, la fusion des données d'état n'est pas conforme et il convient d'arrêter la fabrication pour vérifier les différentes étiquettes RFID. Cette vérification des données d'état est également nécessaire pour éviter tout risque en cas de modifications malveillantes des données d'état dans les étiquettes RFID au cours de la fabrication du produit.

Dans un mode de réalisation particulier, les nouvelles données d'état sont stockées dans un dispositif de stockage centralisé de données d'état.

Cela permet de suivre de manière centralisée les différentes opérations de fabrication du produit.

Dans un mode de réalisation particulier, les nouvelles données d'état sont stockées dans une chaîne de blocs.

Par chaîne de blocs (« blockchain » en anglais), on entend une base de données distribuées et sécurisées par des techniques cryptographiques. Les transactions échangées sont groupées en blocs à intervalles de temps réguliers en formant une chaîne de blocs. Après avoir enregistré les transactions récentes, un nouveau bloc est généré et analysé. Si le bloc est valide, celui peut être horodaté et ajouté à la chaîne de blocs. Chaque bloc est lié au précédent par une clé de hachage. Ainsi, une fois ajouté à la chaîne de blocs, un bloc ne peut plus être modifié ni supprimé, ce qui garantit l'authenticité et la sécurité des données stockées. Les blocs de données de la chaîne de blocs peuvent être accessibles en lecture et/ou en écriture par des entités externes à l'usine de fabrication. Par exemple, les blocs de données peuvent être consultés par un client du produit fabriqué qui veut s'assurer de sa bonne conformité. Un tel client pourra alors avoir accès au détail des différentes opérations de fabrication via la chaîne de blocs.

Un autre objet de l'invention concerne un système pour le partage de données de fabrication d'un produit, ledit produit étant fabriqué à partir de différents sous-produits lors de différentes opérations de fabrication. Chaque sous-produit et/ou chaque opération de fabrication est associé à une étiquette RFID. Chaque étiquette RFID comprend des données d'état de fabrication du produit. Le système de partage des données comprend :
- un récepteur de données d'état de la fabrication du produit des aux moins deux étiquettes RFID ;
- un générateur de nouvelles données d'état de la fabrication du produit à partir desdites données d'état reçues, lesdites données d'état reçues étant réorganisées par ledit générateur ;
- un transmetteur des nouvelles données d'état de fabrication du produit vers les au moins deux étiquettes RFID.

Dans un mode de réalisation particulier, le système comprend un dispositif de stockage centralisé de données d'état pour le stockage des nouvelles données d'état.

Dans un mode de réalisation particulier, le système comprend une chaîne de blocs pour le stockage des nouvelles données d'état.

Un autre objet de l'invention concerne un produit programme d'ordinateur comportant des instructions de programme exploitables par le système pour le partage de données de fabrication d'un produit selon un objet précédent, qui lorsqu'elles sont exécutées ou interprétées par ledit système déclenchent la mise en œuvre du procédé pour le partage de données de fabrication d'un produit selon un autre objet précédent.

La présente invention sera mieux comprise à la lecture de la description détaillée de modes de réalisation pris à titre d'exemples nullement limitatifs et illustrés par les dessins annexés sur lesquels :

**[****Fig 1****]** la figure 1 est une vue schématique illustrant un système pour le partage de données de fabrication d'un produit conforme à l'invention ;

**[****Fig 2****]** la figure 2 est une vue schématique d'un calculateur local du système de partage de données de la figure 1 ;

**[****Fig 3****]** la figure 3 illustre une partie d'un procédé pour le partage de données de fabrication d'un produit conforme à l'invention.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

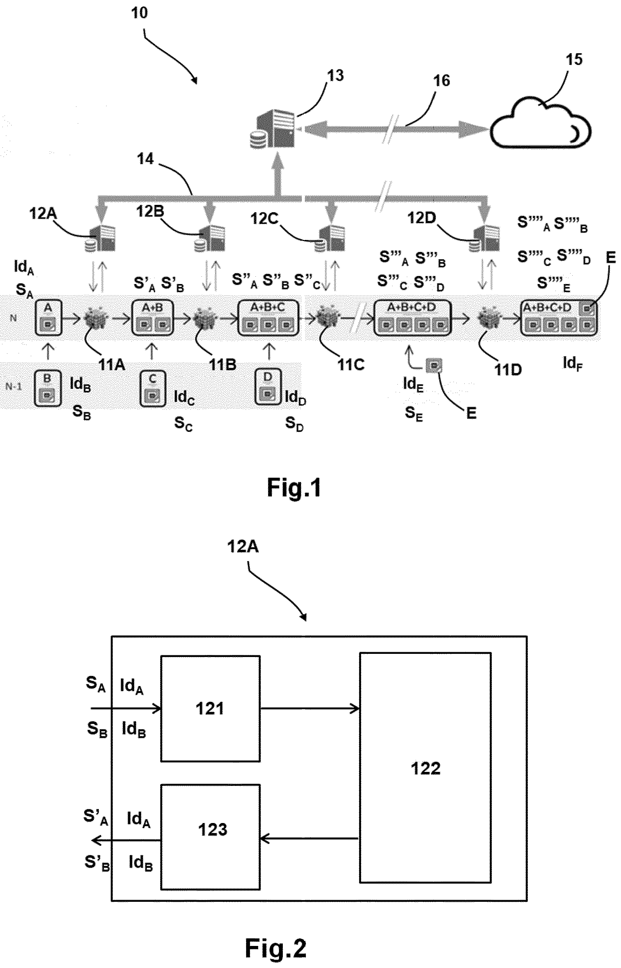

La figure 1 représente schématiquement un système 10 conforme à l'invention pour le partage de données de fabrication d'un produit. Ce système comprend ici :
- des étiquettes RFID A, B, C, D, E ;
- des machines locales 11A, 11B, 11C, 11D ;
- des calculateurs locaux 12A, 12B, 12C, 12D ;
- un serveur central 13 ;
- un réseau local 14 ;
- un nuage informatique 15 ;
- une passerelle 16.

Les étiquettes RFID A, B, C, D, E sont des éléments électroniques comprenant une antenne et une puce électronique. L'antenne est conçue pour fonctionner dans une bande de fréquence donnée, par exemple dans une basse fréquence comprise entre 120 KHZ et 150 KHZ. La puce électronique est reliée à l'antenne. Cette puce est destinée à stocker un identifiant Id_{A}, Id_{B}, Id_{C}, Id_{D}, Id_{E} respectivement associé à chacune des étiquettes RFID A, B, C, D, E. La puce électronique est également adaptée pour stocker des données d'état de la fabrication du produit S_{A}, S_{B}, S_{C}, S_{D}; S'_{A}, S'_{B} ; S"_{A}, S"_{B}, S"_{C} ; S‴_{A}, S‴_{B}, S‴_{C}, S‴_{D} ; S_{E}, Sʺʺ_{A}, Sʺʺ_{B}, Sʺʺ_{C}, Sʺʺ_{D}, Sʺʺ_{E}. Ces données d'état sont modifiables dans l'étiquette RFID. On notera que le produit étant fabriqué à partir de différents sous-produits lors de différentes opérations de fabrication, chaque sous-produit est associé à une étiquette RFID A, B, C, D. De la même manière, une opération immatérielle, par exemple un essai thermique ou un chargement de logiciel, peut être associé également à une étiquette RFID E.

Les machines locales 11A, 11B, 11C, 11D sont adaptées pour lire les étiquettes RFID A, B, C, D, E et pour extraire tout ou partie des données d'état de fabrication du produit. Ces machines locales 11A, 11B, 11C, 11D sont également adaptées pour écrire des nouvelles données d'état de fabrication du produit à la place des données d'état initialement extraites. Par exemple, la machine locale 11A extrait les données d'état de fabrication S_{A} de l'étiquette RFID A et les données d'état de fabrication S_{B} de l'étiquette RFID B. Ces données d'état de fabrication S_{A}, S_{B} sont envoyées au calculateur local 12A. En retour, le calculateur local 12A fournit des nouvelles données d'état S'_{A} et S'_{B} qui vont être respectivement écrites dans l'étiquette RFID A et dans l'étiquette RFID B. Les machines locales 11A, 11B, 11C, 11D permettent également l'assemblage des différents sous-produits au cours des différentes opérations de fabrication.

Les calculateurs locaux 12A, 12B, 12C, 12D sont adaptés pour effectuer des opérations d'agrégation de données d'état de fabrication du produit provenant de différentes étiquettes RFID et des opérations de fusion de données fractionnées. Les données fusionnées sont ensuite éclatées en de nouvelles données d'état de fabrication du produit puis réparties entre les différentes étiquettes RFID. La figure 2 illustre plus particulièrement le calculateur local 12A de la figure 1. Ce calculateur local 12A comprend un récepteur 121 de données d'état S_{A}, S_{B} provenant respectivement de l'étiquette RFID A et de l'étiquette RFID B. Le récepteur 121 reçoit également les identifiant Id_{A}, Id_{B} des étiquettes RFID A, RFID B. Le calculateur local 12A comprend en outre un générateur 122 de nouvelles données d'état S'_{A}, S'_{B}. Comme il a déjà été précisé, ce générateur 122 agrège les données d'état reçues S_{A}, S_{B} puis il les sépare et les fusionne en nouvelles données d'état S'_{A}, S'_{B}. Dans une variante de réalisation, les données d'état agrégées sont recombinées avant d'être séparées. Ceci permet d'introduire un certain aléa dans la génération de ces nouvelles données d'état. Les nouvelles données d'état S'_{A}, S'_{B} sont associées respectivement aux identifiants Id_{A}, Id_{B} des étiquettes RFID A, RFID B. Enfin, un transmetteur 123 transmet les nouvelles données d'état S'_{A}, S'_{B} auxdites étiquettes RFID A, RFID B. La description du calculateur local 12A à partir de la figure 2 peut également s'appliquer mutatis mutandis aux autres calculateur locaux 12B, 12C, 12D.

Le serveur central 13 est adapté pour centraliser les données d'état de fabrication du produit. Il comprend pour cela des moyens de stockage adaptés. Ces moyens de stockage peuvent ainsi contenir l'ensemble de l'historique du processus de fabrication du produit.

Le réseau local 14 est adapté pour permettre une communication entre les machines locales 11A, 11B, 11C, 11D, les calculateurs locaux 12A, 12B, 12C, 12D et le serveur central 13.

Le nuage informatique 15 regroupe l'ensemble des services informatiques qui sont accessibles à l'extérieur de l'usine de fabrication. Ces services informatiques sont par exemple un service de stockage sur des serveurs tiers, des mises en réseau, des logiciels tels que des logiciels bureautiques, du contenu, un accès à Internet.

La passerelle 16 relie le serveur central 11 au nuage informatique 12. Elle permet ainsi de faire le lien entre le réseau local et le réseau Internet du nuage informatique 15. La passerelle 16 effectue principalement le routage des paquets de données. Elle peut avoir également une fonction de pare-feu, de proxy ou effectuer une surveillance de la qualité de service du réseau.

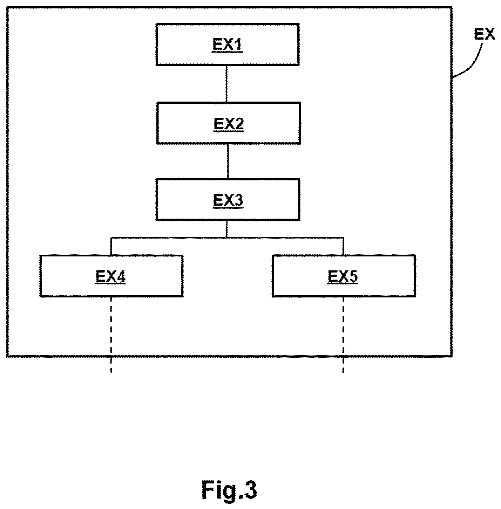

Il va maintenant être décrit un procédé, conforme à l'invention, pour le partage de données de fabrication d'un produit à partir de la figure 1 et de la figure 3. Le produit fabriqué est ici un calculateur pour acquisition et affichage de données avion utilisé pour actionner des volets dudit avion. Ce calculateur pour acquisition comprend un châssis, une carte d'alimentation, une carte CPU (pour « Central Processing Unit » en anglais), une carte vidéo. Chacun de ces sous-éléments comprend une étiquette RFID. Ainsi, le châssis est associé à l'étiquette RFID A, la carte d'alimentation est associée à l'étiquette RFID B, la carte CPU est associée à l'étiquette RFID C, et la carte vidéo est associée à l'étiquette RFID D. L'étiquette RFID A comprend l'identifiant Id_{A}. L'étiquette RFID B comprend l'identifiant Id_{B}. L'étiquette RFID C comprend l'identifiant Id_{C}. L'étiquette RFID D comprend l'identifiant Id_{D}. Une étiquette RFID E est associée à un essai au brouillard salin. Cet essai est réalisé une fois l'assemblage du châssis, de la carte d'alimentation, de la carte CPU et de la carte vidéo obtenu. L'étiquette RFID E comprend quant à elle l'identifiant Id_{E}.

La figure 3 illustre des étapes EX1 à EX5 avec X compris entre 1 et N, N représentant le nombre d'opérations (assemblage, traitement) que vont subir les différents sous-produits pour former le produit final. Dans une première opération E1, la carte d'alimentation est assemblée avec le châssis par la machine locale 11A. Les données d'état S_{A} associées à l'étiquette RFID A et les données d'état S_{B} associées à l'étiquette RFID B sont transmises par la machine locale 11A. Dans une étape E11, ces données d'état S_{A}, S_{B} sont reçues par le calculateur local 12A. Dans une étape E12, des nouvelles données d'état S'_{A}, S'_{B} sont générées. Dans une étape E13, les nouvelles données d'état S'_{A}, S'_{B} sont encryptées. Pour cela, le calculateur local 12A comprend une clé privée et la machine locale 11A comprend une clé publique associée à ladite clé privée. Dans une étape E14, ces nouvelles données d'état S'_{A}, S'_{B} sont transmises à la machine locale 11A. Celles-ci sont alors stockées respectivement dans les étiquettes RFID A, RFID B à la place des données d'état précédentes S_{A}, S_{B}. On notera que les nouvelles données d'état S'_{A}, S'_{B} sont différentes des données d'état S_{A}, S_{B}. Dans un mode de réalisation particulier, les nouvelles données d'état S'_{A} sont identiques aux nouvelles données d'état S'_{B}. En variante, les nouvelles données d'état S'_{A} sont différentes des nouvelles données d'état S'_{B}. En parallèle, dans une étape E15, les nouvelles données d'état S'_{A}, S'_{B} sont stockées dans le dispositif de stockage centralisé 13 de données d'état. Ces nouvelles données d'état S'_{A}, S'_{B} sont associées, dans le dispositif de stockage centralisé 13, avec les identifiants Id_{A}, Id_{B} des étiquettes RFID A, RFID B et avec un identifiant correspondant à la première opération E1.

L'étiquette RFID attachée à chaque sous-produit important de la nomenclature porte en supplément de ses données classiques un ensemble de données liées au processus de fabrication qui se caractérise par le fait qu'il existe un suivi de la fabrication de la même manière qu'un logiciel de suivi. On améliore ainsi drastiquement la traçabilité et la sécurité des données de production et on peut à chaque transformation physique ou non du produit associer une transformation dans le système d'information et assurer la localisation permanente des produits.

Dans une seconde opération E2, la carte CPU est assemblée avec un ensemble comprenant la carte d'alimentation et le châssis, par la machine locale 11B. Les données d'état S'_{A} associées à l'étiquette RFID A, les données d'état S'_{B} associées à l'étiquette RFID B et les données d'état S_{C} associées à l'étiquette RFID C sont transmises par la machine locale 11B. Dans une étape E21, ces données d'état S'_{A}, S'_{B}, S_{C} sont reçues par le calculateur local 12B. Dans une étape E22, des nouvelles données d'état S"_{A}, S"_{B}, S"_{C} sont générées. Dans une étape E23, les nouvelles données d'état S"_{A}, S"_{B}, S"_{C} sont encryptées. Pour cela, le calculateur local 12B comprend une clé privée et la machine locale 11B comprend une clé publique associée à la clé privée. Dans une étape E24, ces nouvelles données d'état S"_{A}, S"_{B}, S"_{C} sont transmises à la machine locale 11C. Celles-ci sont alors stockées respectivement dans les étiquettes RFID A, RFID B, RFID C à la place des données d'état précédentes S'_{A}, S'_{B}, S_{C}. On notera que les nouvelles données d'état S"_{A}, S"_{B}, S"_{C} sont différentes des données d'état S'_{A}, S'_{B}, S_{C}. Dans un mode de réalisation particulier, les nouvelles données d'état S"_{A} sont identiques aux nouvelles données d'état S"_{B} et S"_{C}. En variante, les nouvelles données d'état S"_{A} sont différentes des nouvelles données d'état S"_{B} et S"_{C}. En parallèle, dans une étape E25, les nouvelles données d'état S"_{A}, S"_{B}, S"_{C} sont stockées dans le dispositif de stockage centralisé 13 de données d'état. Ces nouvelles données d'état S"_{A}, S"_{B}, S"_{C} sont associées, dans le dispositif de stockage centralisé 13, avec les identifiants Id_{A}, Id_{B}, Id_{C} des étiquettes RFID A, RFID B, RFID C et avec un identifiant associé à la seconde opération E2.

Il sera procédé de manière identique pour la troisième opération E3 et pour la quatrième opération E4.

Ainsi, la troisième opération E3 concerne l'assemblage de la carte vidéo avec un ensemble comprenant la carte CPU, la carte d'alimentation, le châssis, par la machine locale 11C. Des nouvelles données d'état S‴_{A}, S‴_{B}, S‴_{C}, S‴_{D} sont générées à partir des données d'état S"_{A}, S"_{B}, S"_{C}, S_{D} par le calculateur local 12C au cours de différentes opérations E31 à E35. Ces nouvelles données d'état S‴_{A}, S‴_{B}, S‴_{C}, S‴_{D} sont associées, dans le dispositif de stockage centralisé 13, avec les identifiants Id_{A}, Id_{B}, Id_{C}, Id_{D} des étiquettes RFID A, RFID B, RFID C, RFID D et avec un identifiant associé à la troisième opération E3.

La quatrième opération E4 concerne l'essai au brouillard salin sur un ensemble comprenant la carte vidéo, la carte CPU, la carte d'alimentation, le châssis, réalisé par la machine locale 11D. Des nouvelles données d'état Sʺʺ_{A}, Sʺʺ_{B}, Sʺʺ_{C}, Sʺʺ_{D}, Sʺʺ_{E} sont générées à partir des données d'état S‴_{A}, S‴_{B}, S‴_{C}, Sʺʺ_{D} par le calculateur local 12D au cours des différentes opérations E41 à E45. Ces nouvelles données d'état Sʺʺ_{A}, Sʺʺ_{B}, Sʺʺ_{C}, Sʺʺ_{D}, Sʺʺ_{E} sont associées, dans le dispositif de stockage centralisé 13, avec les identifiants Id_{A}, Id_{B}, Id_{C}, Id_{D}, Id_{E} des étiquettes RFID A, RFID B, RFID C, RFID D, RFID E et avec un identifiant de la quatrième opération E4.

Le produit final comprend alors les étiquettes RFID A, RFID B, RFID C, RFID D, RFID E avec les nouvelles données d'état Sʺʺ_{A}, Sʺʺ_{B}, Sʺʺ_{C}, Sʺʺ_{D}, Sʺʺ_{E}. Un identifiant Id_{F} est associé à ce produit final. Cet identifiant Id_{F} est stocké dans le dispositif de stockage centralisé 13 avec les opérations E1, E2, E3, E4.

Dans un mode de réalisation préférentiel, les données d'état sont vérifiées à leur réception dans les différents calculateurs locaux 12B, 12C, 12D. Par exemple, il est vérifié que les données d'état reçues S'_{A}, S'_{B} sont identiques ou sont compatibles entre elles. Si ce n'est pas le cas, il est déduit que l'une des étiquettes RFID A, RFID B a été modifiée, de manière intentionnelle ou non, entre la première opération E1 et la seconde opération E2. Dès lors, la fabrication du produit doit être stoppée.

Les données d'état associées aux identifiants des étiquettes RFID et aux identifiants des différentes opérations peuvent être consultés à tout moment en interne à partir du dispositif de stockage centralisé 13. Ces données peuvent être également consultées par des personnes extérieures à l'usine de fabrication via le nuage informatique 15, la passerelle 16 et le serveur central 13 et à partir de l'identifiant Id_{F} présent sur le produit final.

Dans un mode de réalisation préférentiel, les nouvelles données d'état sont stockées dans une chaîne de blocs (non représentée sur la figure 1) au fur et à mesure de l'avancement des opérations E1, E2, E3, E4. Cette chaîne de blocs est accessible par des personnes extérieure à l'usine de fabrication via le nuage informatique 15, la passerelle 16 et à partir de l'identifiant Id_{F} présent sur le produit final.

Un autre objet de l'invention concerne un produit programme d'ordinateur comportant des instructions de programme exploitables par le système 121, 122, 123 pour le partage de données de fabrication du produit final qui lorsqu'elles sont exécutées ou interprétées par ce système déclenchent la mise en œuvre du procédé pour le partage des données E1, E2, E3, E4.

Le programme d'ordinateur peut être enregistré sur un support d'enregistrement lisible par un processeur. Le support peut être électronique, magnétique, optique ou électromagnétique.

En particulier, l'invention peut être implémentée par un dispositif comprenant un processeur et une mémoire. Le processeur peut être un processeur générique, un processeur spécifique, un circuit intégré propre à une application (connu sous le nom anglais d'ASIC (pour « Application-Specific Integrated Circuit », en anglais)) ou un réseau de portes programmables in situ (connu sous le nom anglais de FPGA pour « Field-Programmable Gate Array »)).

Le dispositif peut utiliser un ou plusieurs circuits électroniques dédiés ou un circuit à usage général. La technique de l'invention peut se réaliser sur une machine de calcul reprogrammable (un processeur ou un micro-contrôleur, par exemple) exécutant un programme comprenant une séquence d'instructions, ou sur une machine de calcul dédiée (par exemple un ensemble de portes logiques comme un FPGA ou un ASIC, ou tout autre module matériel).

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage non transitoire lisible par ordinateur) codé avec un programme d'ordinateur (c'est-à-dire plusieurs instructions exécutables) qui, lorsqu'il est exécuté sur un processeur ou sur plusieurs processeurs, effectue les fonctions des modes de réalisation de l'invention décrits précédemment.

A titre d'exemple d'architecture matérielle adaptée à mettre en œuvre l'invention, un dispositif selon l'invention peut comporter un bus de communication auquel sont reliées une unité centrale de traitement ou microprocesseur, une mémoire morte (ROM pour « Read Only Memory » en anglais) pouvant comporter les programmes nécessaire à la mise en œuvre de l'invention, une mémoire vive ou mémoire cache (RAM pour « Random Acces Memory » en anglais) comportant des registres adaptés à enregistrer des variables et paramètres créées et modifiées au cours de l'exécution des programmes précités ; une interface de communication ou E/S (pour « Input/Output » en anglais) adaptée à transmettre et à recevoir des données.

L'invention permet ainsi à partir de données d'état de A sur une étiquette RFID A et de données d'état de B sur une étiquette RFID B, élément initiaux subissant un processus de production, d'agréger, fractionner puis fusionner des données issues de ces données d'état de A et de B pour les redistribuer de manière cryptée sur la capacité de stockage disponible à ce moment du processus. Cette capacité de stockage correspond aux étiquettes RFID A et RFID B de telle sorte que chaque étiquette prise indépendamment, ne permet pas de recréer une information cohérente. On améliore la sécurisation de la gestion de configuration et la gestion de toutes les données de traçabilité.

L'invention apporte en outre les avantages suivants :
- limiter le besoin en transaction informatique avec le réseau informatique et les logiciels de suivi puisque les données d'état de fabrication sont directement embarquées dans les étiquettes RFID ;
- améliorer la tolérance à des arrêts du logiciel de suivi ;
- garantir que toute modification physique du produit dans sa fabrication est traduite simultanément par une transaction sécurisée dans le système d'information ;
- garantir la configuration du produit fabriqué, tout en ayant une protection des données de cette configuration par le cryptage et le partage physique desdites informations entre les étiquettes RFID ;
- toute intervention, réparation ou démontage non autorisé d'un sous-produit se traduit par une destruction ou une impossibilité de récupérer l'information existant sur le produit à la manière d'une marque d'inviolabilité ;
- le système d'avancement de production est complètement sécurisé et des opérations n'entrainant pas de modification physique (traitement thermique, test, chargement de mémoire ou autre) sont suivies de manière aisée et fiable par l'encodage de la réalisation de ces opérations selon le principe décrit précédemment ;
- l'utilisation des technologies de chaine de blocs assure l'enchainement unique des opérations, le contrôle de la configuration et la résistance améliorée au rétro engineering.

L'avancement du procédé de fabrication qui se caractérise par le rajout en unité de lieu d'autres sous-ensembles portant des étiquettes RFID permet de sécuriser l'ensemble documentaire par éclatement et cryptage de type chaine de blocs de cet ensemble documentaire.

En résultat, l'avancement du processus de fabrication se fait en indépendance relative d'un système de suivi, la bonne fin d'une opération (assemblage, test, etc.) se traduit par une transformation non équivoque et systématique de l'ensemble documentaire, son ré-éclatement et cryptage entre les étiquettes RFID attachées aux sous-éléments.

L'invention n'est pas limitée aux modes de réalisation et variantes présentées et d'autres modes de réalisation et variantes apparaîtront clairement à l'homme du métier.

Ainsi, l'invention s'applique dans les domaines de haute technologie comme la production de produits pour l'aéronautique, pour le spatial ou pour le domaine médical dans lesquels la notion de configuration et de traçabilité est forte.

Ainsi, l'invention s'applique aux fabrications dans laquelle la chaîne logistique est complexe ou spatialement étendue avec des problématiques de localisation d'éléments.

Ainsi, la lecture des étiquettes RFID au niveau des différentes machines locales permet la localisation dans le flux des différents sous-produits.

Ainsi, tout ou partie des étiquettes RFID comprend une capacité de calcul distribuée.

Ainsi, l'application d'une stratégie fusion-cryptage-éclatement peut s'appliquer à tout système d'objets de type IOT (pour « Internet Of Things » en anglais) collaboratifs où il est recherché une sécurisation des données et où la présence de l'ensemble des objets est critique pour la bonne réalisation d'une mission ou d'une opération.

Ainsi, l'invention s'applique à tout groupe d'objets communicants ayant un besoin d'un fonctionnement collectif (partage d'information) sécurisé et dans lequel la perte d'un élément de la chaine est critique.

## Revendications

1. Procédé pour le partage de données de fabrication d'un produit, ledit produit étant fabriqué à partir de différents sous-produits lors de différentes opérations de fabrication, chaque sous-produit et/ou chaque opération de fabrication étant associé à une étiquette RFID (A, B, C, D, E), chaque étiquette RFID comprenant des données d'état de fabrication du produit (S_{A}, S_{B} ; S'_{A}, S'_{B}, S_{C} ; S"_{A}, S"_{B}, S"_{C}, S_{D} ; S‴_{A}, S‴_{B}, S‴_{C}, S‴_{D}, S_{E}), **caractérisé en ce que** lors de la fabrication dudit produit, ledit procédé comprend :
- une étape de réception (EX1) de données d'état de la fabrication du produit des aux moins deux étiquettes RFID ;
- une étape de génération (EX2) de nouvelles données d'état de la fabrication du produit (S'_{A}, S'_{B} ; S"_{A}, S"_{B}, S"_{C} ; S‴_{A}, S‴_{B}, S‴_{C}, S‴_{D ;} Sʺʺ_{A}, Sʺʺ_{B}, Sʺʺ_{C}, Sʺʺ_{D}, Sʺʺ_{E}) à partir desdites données d'état reçues (S_{A}, S_{B} ; S'_{A}, S'_{B}, S_{C} ; S"_{A}, S"_{B}, S"_{C}, S_{D} ; S‴_{A}, S‴_{B}, S‴_{C}, S‴_{D}, S_{E}), lesdites données d'état reçues étant réorganisées au cours de ladite étape de génération ;
- une étape de transmission (EX4) des nouvelles données d'état de fabrication du produit vers les au moins deux étiquettes RFID (A, B, C, D, E).

2. Procédé selon la revendication 1, dans lequel l'étape de génération comprend une étape d'agrégation des données d'état (S_{A}, S_{B} ; S'_{A}, S'_{B}, S_{C} ; S"_{A}, S"_{B}, S"_{C}, S_{D}; S‴_{A}, S‴_{B}, S‴_{C}, S‴_{D}, S_{E}) des aux moins deux étiquettes RFID, une étape de fractionnement desdites données d'état, une étape de fusion des données fractionnées pour former des nouvelles données d'état (S'_{A}, S'_{B} ; S"_{A}, S"_{B}, S"_{C} ; S‴_{A}, S‴_{B}, S‴_{C}, S‴_{D ;} Sʺʺ_{A}, Sʺʺ_{B}, Sʺʺ_{C}, Sʺʺ_{D}, Sʺʺ_{E}) de fabrication du produit.

3. Procédé selon l'une quelconque des revendications 1 ou 2, dans lequel les nouvelles données d'état de fabrication du produit sont réparties entre les au moins deux étiquettes RFID.

4. Procédé selon l'une quelconque des revendications 1 à 3, dans lequel les données d'état de fabrication du produit comprennent des données choisies parmi la liste des données suivantes :
- un ou plusieurs plans ;
- un ou plusieurs certificats de conformité ;
- une ou plusieurs fiches d'instructions ;
- un ou plusieurs résultats de fabrication.

5. Procédé selon l'une quelconque des revendications 1 à 4, dans lequel ledit procédé comprend, préalablement à l'étape de transmission (EX4) des nouvelles données d'état, une étape d'encryptage (EX3) desdites nouvelles données d'état.

6. Procédé selon l'une quelconque des revendications 1 à 5, dans lequel ledit procédé comprend une étape de vérification des données d'état reçues.

7. Procédé selon l'une quelconque des revendications 1 à 6, dans lequel les nouvelles données d'état sont stockées dans un dispositif de stockage (EX5) centralisé (13) de données d'état.

8. Procédé selon l'une quelconque des revendications 1 à 7, dans lequel les nouvelles données d'état sont stockées dans une chaîne de blocs.

9. Système pour le partage de données de fabrication d'un produit, ledit produit étant fabriqué à partir de différents sous-produits lors de différentes opérations de fabrication, chaque sous-produit et/ou chaque opération de fabrication étant associé à une étiquette RFID, chaque étiquette RFID comprenant des données d'état de fabrication du produit, ledit système de partage de données comprenant :
- un récepteur (121) de données d'état (S_{A}, S_{B} ; S'_{A}, S'_{B}, S_{C} ; S"_{A}, S"_{B}, S"_{C}, S_{D} ; S‴_{A}, S‴_{B}, S‴_{C}, S‴_{D}, S_{E}) de la fabrication du produit des aux moins deux étiquettes RFID ;
- un générateur (122) de nouvelles données d'état (S'_{A}, S'_{B} ; S"_{A}, S"_{B}, S"_{C} ; S‴_{A}, S‴_{B}, S‴_{C}, S‴_{D ;} Sʺʺ_{A}, Sʺʺ_{B}, Sʺʺ_{C}, Sʺʺ_{D}, Sʺʺ_{E}) de la fabrication du produit à partir desdites données d'état reçues, lesdites données d'état reçues étant réorganisées par ledit générateur (122) ;
- un transmetteur (123) des nouvelles données d'état de fabrication du produit vers les au moins deux étiquettes RFID.

10. Système selon la revendication 9, dans lequel ledit système comprend un dispositif de stockage centralisé (13) de données d'état pour le stockage des nouvelles données d'état.

11. Système selon l'une quelconque des revendications 9 ou 10, dans lequel ledit système comprend une chaîne de blocs pour le stockage des nouvelles données d'état.

12. Produit programme d'ordinateur comportant des instructions de programme exploitables par le système pour le partage de données de fabrication d'un produit selon les revendications 9 à 11, qui lorsqu'elles sont exécutées ou interprétées par ledit système déclenchent la mise en œuvre du procédé pour le partage de données de fabrication d'un produit selon l'une quelconque des revendications 1 à 8.

## Patentansprüche

1. Verfahren zum Teilen von Herstellungsdaten eines Produkts, wobei das Produkt ausgehend von unterschiedlichen Unterprodukten während unterschiedlicher Herstellungsvorgänge hergestellt wird, wobei jedes Unterprodukt und/oder jeder Herstellungsvorgang mit einem RFID-Etikett (A, B, C, D, E) assoziiert ist, wobei jedes RFID-Etikett Zustandsdaten der Produktherstellung (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}) beinhaltet, **dadurch gekennzeichnet, dass** während der Herstellung des Produkts das Verfahren Folgendes beinhaltet:
- einen Schritt (EX1) des Empfangs der Zustandsdaten der Produktherstellung von den mindestens zwei RFID-Etiketten;
- einen Schritt (EX2) der Erzeugung neuer Zustandsdaten der Produktherstellung (S'_{A}, S'_{B}; S"_{A}, S"_{B}, S"_{C}; S‴_{A}, S‴_{B}, S‴_{C}, S‴_{D} ; SʺʺA, Sʺʺ_{B}, Sʺʺ_{C}, Sʺʺ_{D}, Sʺʺ_{E}) ausgehend von den empfangenen Zustandsdaten (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}), wobei die empfangenen Zustandsdaten im Laufe des Schritts der Erzeugung neu organisiert werden;
- einen Schritt (EX4) der Übertragung der neuen Zustandsdaten der Produktherstellung in Richtung der mindestens zwei RFID-Etiketten (A, B, C, D).

2. Verfahren nach Anspruch 1, wobei der Schritt der Erzeugung einen Schritt der Aggregation der Zustandsdaten (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}) der mindestens zwei RFID-Etiketten, einen Schritt der Fraktionierung der Zustandsdaten, einen Schritt der Fusion der fraktionierten Daten zum Bilden neuer Zustandsdaten (S'_{A}, S'_{B}; S"_{A}, S"_{B}, S"_{C}; S‴_{A}, S‴_{B}, S‴_{C}, S‴_{D}; Sʺʺ_{A}, Sʺʺ_{B}, Sʺʺ_{C}, Sʺʺ_{D}, Sʺʺ_{E}) der Produktherstellung beinhaltet.

3. Verfahren nach einem der Ansprüche 1 oder 2, wobei die neuen Zustandsdaten der Produktherstellung zwischen den mindestens zwei RFIS-Etiketten verteilt sind.

4. Verfahren nach einem der Ansprüche 1 bis 3, wobei Zustandsdaten der Produktherstellung Daten beinhalten, die ausgewählt sind aus der folgenden Liste von Daten:
- einem oder mehreren Plänen;
- einem oder mehreren Konformitätszertifikaten;
- einem oder mehreren Anweisungsblättern;
- einem oder mehreren Herstellungsergebnissen.

5. Verfahren nach einem der Ansprüche 1 bis 4, wobei das Verfahren vor dem Schritt (EX4) der Übertragung neuer Zustandsdaten einen Schritt (EX3) der Verschlüsselung der neuen Zustandsdaten beinhaltet.

6. Verfahren nach einem der Ansprüche 1 bis 5, wobei das Verfahren einen Schritt der Verifikation der empfangenen Zustandsdaten beinhaltet.

7. Verfahren nach einem der Ansprüche 1 bis 6, wobei die neuen Zustandsdaten in einer zentralisierten (13) Speichervorrichtung (EX5) für Zustandsdaten gespeichert sind.

8. Verfahren nach einem der Ansprüche 1 bis 7, wobei die neuen Zustandsdaten in einer Blockkette gespeichert sind.

9. System zum Teilen von Herstellungsdaten eines Produkts, wobei das Produkt ausgehend von unterschiedlichen Unterprodukten während unterschiedlicher Herstellungsvorgänge hergestellt wird, wobei jedes Unterprodukt und/oder jeder Herstellungsvorgang mit einem RFID-Etikett assoziiert ist, wobei jedes RFID-Etikett Zustandsdaten der Produktherstellung beinhaltet, wobei das System zum Teilen von Daten Folgendes beinhaltet:
- einen Empfänger (121) der Zustandsdaten (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}) der Produktherstellung der mindestens zwei RFID-Etiketten;
- einen Generator (122) neuer Zustandsdaten (S'_{A}, S'_{B}; S"_{A}, S"_{B}, S"_{C}; S‴_{A}, S‴_{B}, S‴_{C}, S‴_{D}; Sʺʺ_{A}, Sʺʺ_{B}, Sʺʺ_{C}, Sʺʺ_{D}, Sʺʺ_{E}) der Produktherstellung ausgehend von den empfangenen Zustandsdaten, wobei die empfangenen Zustandsdaten durch den Generator (122) neu organisiert werden;
- einen Sender (123) neuer Zustandsdaten der Produktherstellung in Richtung der mindestens zwei RFID-Etiketten.

10. System nach Anspruch 9, wobei das System eine zentralisierte Speichervorrichtung (13) der Zustandsdaten zum Speichern der neuen Zustandsdaten beinhaltet.

11. System nach einem der Ansprüche 9 oder 10, wobei das System eine Blockkette zum Speichern der neuen Zustandsdaten beinhaltet.

12. Computerprogrammprodukt, umfassend durch das System zum Teilen der Herstellungsdaten eines Produkts nach Ansprüchen 9 bis 11 nutzbare Anweisungen, die, wenn sie von dem System ausgeführt oder interpretiert werden, das Durchführen des Verfahrens zum Teilen von Herstellungsdaten eines Produkt nach einem der Ansprüche 1 bis 8 auslösen.

## Claims

1. A method for sharing manufacturing data on a product, said product being manufactured from various sub-products in various manufacturing operations, each sub-product and/or each manufacturing operation being associated with one RFID tag (A, B, C, D, E), each RFID tag comprising data (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}) on the manufacturing state of the product, **characterized in that** during the manufacture of said product, said method comprises
- a step of receiving (EX1) data on the manufacturing state of the product from the at least two RFID tags;
- a step of generating (EX2) new data on the manufacturing state of the product (S'_{A}, S'_{B}; S"_{A}, S"_{B}, S"_{C}; S‴_{A}, S‴_{B}, S‴_{C}, S‴_{D}; Sʺʺ_{A}, Sʺʺ_{B}, Sʺʺ_{C}, Sʺʺ_{D}, Sʺʺ_{E}) based on said received state data (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}), said received state data being reorganized in said generating step;
a step of transmitting (EX4) the new data on the manufacturing state of the product to the at least two RFID tags (A, B, C, D, E).

2. The method as claimed in claim 1, wherein the generating step comprises a step of aggregating the state data (S_{A}, S_{B} ; S'_{A}, S'_{B}, S_{C} ; S"_{A}, S"_{B}, S"_{C}, S_{D} ; S‴_{A}, S‴_{B}, S‴_{C}, S‴_{D}, S_{E}) of the at least two RFID tags, a step of splitting said state data, and a step of merging the split data to form new data (S'_{A}, S'_{B} ; S"_{A}, S"_{B}, S"_{C} ; S‴_{A}, S‴_{B}, S‴_{C}, S‴_{D} ; Sʺʺ_{A}, Sʺʺ_{B}, Sʺʺ_{C}, Sʺʺ_{D}, Sʺʺ_{E}) on the manufacturing state of the product.

3. The method as claimed in either one of claims 1 and 2, wherein the new data on the manufacturing state of the product are distributed between the at least two RFID tags.

4. The method as claimed in any one of claims 1 to 3, wherein the data on the manufacturing state of the product comprise data selected from the list of the following data:
- one or more plans;
- one or more certificates of conformity;
- one or more instruction sheets;
- one or more manufacturing results.

5. The method as claimed in any one of claims 1 to 4, wherein said method comprises, prior to the step of transmitting (EX4) the new state data, a step of encrypting (EX3) said new state data.

6. The method as claimed in any of claims 1 to 5, wherein said method comprises a step of verifying the received state data.

7. The method as claimed in any one of claims 1 to 6, wherein the new state data are stored (EX5) in a centralized state-data storage device (13).

8. The method as claimed in any of claims 1 to 7, wherein the new state data are stored in a blockchain.

9. A system for sharing manufacturing data on a product, said product being manufactured from various sub-products in various manufacturing operations, each sub-product and/or each manufacturing operation being associated with one RFID tag, each RFID tag comprising data on the manufacturing state of the product, said data-sharing system comprising:
- a receiver (121) of data (S_{A}, S_{B}; S'_{A}, S'_{B}, S_{C}; S"_{A}, S"_{B}, S"_{C}, S_{D}; S‴_{A}, S‴_{B}, S‴_{C}, S‴_{D}, S_{E}) on the manufacturing state of the product from at least two RFID tags;
- a generator (122) of new data (S'_{A}, S'_{B}; S"_{A}, S"_{B}, S"_{C}; S‴_{A}, S‴_{B}, S‴_{C}, S‴_{D}; Sʺʺ_{A}, Sʺʺ_{B}, Sʺʺ_{C}, Sʺʺ_{D}, Sʺʺ_{E}) on the manufacturing state of the product based on said received state data, said received state data being reorganized by said generator (122);
- a transmitter (123) of the new data on the manufacturing state of the product to the at least two RFID tags.

10. The system as claimed in claim 9, wherein said system comprises a centralized state-data storage device (13) for storing new state data.

11. The system as claimed in either one of claims 9 and 10, wherein said system comprises a blockchain for storing the new state data.

12. A computer program product comprising program instructions that are exploitable by the system for sharing manufacturing data on a product as claimed in claims 9 to 11, which, when they are executed or interpreted by said system, trigger implementation of the method for sharing manufacturing data on a product as claimed in any one of claims 1 to 8
